# EUROPEAN PATENT SPECIFICATION

(11) **EP 3 505 746 B1**
(45) Date of publication and mention of the grant of the patent: **08.07.2020**
(21) Application number: 18214012.9
(22) Date of filing: 19.12.2018
(51) Int. Cl.: F02D 41/14, F02D 41/18, F02D 41/22, F01N 11/00, F01N 3/025

(54) **ANOMALY DIAGNOSING APPARATUS AND METHOD FOR AIR FLOWMETER**
VORRICHTUNG UND VERFAHREN ZUR DIAGNOSE VON ANOMALIEN FÜR EINEN LUFTSTRÖMUNGSMESSER
APPAREIL ET PROCÉDÉ DE DIAGNOSTIC D'ANOMALIE POUR DÉBITMÈTRE D'AIR

(30) Priority: 26.12.2017 JP 2017249477
(43) Date of publication of application: 03.07.2019
(73) Proprietor: TOYOTA JIDOSHA KABUSHIKI KAISHA, Toyota-shi, Aichi-ken, 471-8571 (JP)
(72) Inventor: NEGISHI, Akiyoshi, TOYOTA-SHI, AICHI-KEN, 471-8571 (JP); OKADA, Shin, TOYOTA-SHI, AICHI-KEN, 471-8571 (JP)
(74) Representative: Cabinet Beau de Loménie

(56) References cited:
- EP-A1- 1 746 275
- EP-A2- 2 224 109
- DE-A1-102009 013 109
- US-A1- 2006 207 558

## Description

### BACKGROUND

The present disclosure relates to an anomaly diagnosing apparatus and an anomaly diagnosing method for an air flowmeter. An air flowmeter is arranged in the intake passage of an internal combustion engine and detects the amount of air. The engine includes a catalyst and an addition valve. The catalyst is arranged in an exhaust passage and has an oxidizing function. The addition valve is arranged upstream of the catalyst in the exhaust passage and adds fuel to exhaust gas. The engine also includes an air-fuel ratio sensor, an exhaust temperature sensor, and a fuel injection valve. The air-fuel ratio sensor is arranged downstream of the addition valve in the exhaust passage. The exhaust temperature sensor is arranged downstream of the catalyst in the exhaust passage. The fuel injection valve supplies fuel into a combustion chamber.

For example, International Publication No. 2011/132678 describes a diagnosing apparatus that determines a deviation rate, which is the deviation between an estimated intake air amount, or an estimated value of the intake air amount, and an intake air amount detected by an air flowmeter. The disclosed diagnosing method determines that there is an anomaly in the air flowmeter if the deviation rate is greater than a reference failure determination value, which is determined in correspondence with the rotation speed of the engine. As described in Paragraph 0038 of the aforementioned document, the estimated intake air amount is calculated based on the rotation speed of the engine and the opening degree of the throttle valve. Further examples of such a diagnosing apparatus are disclosed by EP 1 746 275 A1 or EP 2 224 109 A2.

### SUMMARY

Examples of the present disclosure will now be described.
Example 1: An anomaly diagnosing apparatus for an air flowmeter is provided. The air flowmeter is arranged in an intake passage of an internal combustion engine and detects an air amount. The engine includes a catalyst, which is arranged in an exhaust passage and has an oxidizing function, an addition valve, which is arranged upstream of the catalyst in the exhaust passage and adds fuel to exhaust gas, an air-fuel ratio sensor, which is arranged downstream of the addition valve in the exhaust passage, an exhaust temperature sensor, which is arranged downstream of the catalyst in the exhaust passage, and a fuel injection valve, which supplies fuel into a combustion chamber. The anomaly diagnosing apparatus is configured to execute:
   an air amount estimating process of calculating an estimated air amount, which is an estimated value of an air amount, based on an air-fuel ratio detected by the air-fuel ratio sensor and an injection amount injected by the fuel injection valve; and
   an upward displacement anomaly determining process of determining that there is an anomaly in which a detected value of the air flowmeter is greater than an actual value if a logical conjunction is true of the condition that the detected value of the air flowmeter is greater than the estimated air amount by a margin greater than or equal to a specified amount and the condition that an amount by which a detected value of the exhaust temperature sensor exceeds a reference value is smaller than or equal to a predetermined amount.
      Factors that may cause the detected value of the air flowmeter to become greater than the estimated air amount by a margin greater than or equal to the specified amount include not only an anomaly in the air flowmeter but also a stuck-open anomaly of the addition valve, in which the addition valve is stuck open. At the time of a stuck-open anomaly, the fuel added by the addition valve is oxidized by the catalyst and raises the exhaust temperature downstream of the catalyst as compared to a case without a stuck-open anomaly. Therefore, the above-described configuration requires a condition that the extent by which the detected value of the exhaust temperature sensor exceeds the reference value must be smaller than or equal to the predetermined amount. For example, by setting the reference value to the exhaust temperature downstream or upstream of the catalyst in a case without a stuck-open anomaly, erroneous determination of an anomaly in the air flowmeter is restrained in a case with a stuck-open anomaly.
      Assume a mode in which an estimated air amount is calculated based on a detected value of an air-fuel ratio sensor arranged in the exhaust passage, and the calculated estimated air amount is employed in an internal combustion engine having an addition valve in the exhaust passage, which addition valve adds fuel to exhaust gas. In this mode, if a stuck-open anomaly occurs in the addition valve, the calculated estimated air amount tends to become smaller than the actual value. This may cause erroneous determination that there is an anomaly in which the intake air amount detected by the air flowmeter becomes smaller than the actual intake air amount. The above-described configuration restrains such erroneous determination.
Example 2: In the anomaly diagnosing apparatus for an air flowmeter of Example 1, the upward displacement anomaly determining process is a process of determining that there is an anomaly in which the detected value of the air flowmeter is greater than an actual value if the logical conjunction remains true for a predetermined period.
   In the above-described configuration, it is determined that there is an anomaly if the logical conjunction remains true for a predetermined period. This improves the tolerance to noise of such determination, thus enhancing the accuracy of the determination.
Example 3: In the anomaly diagnosing apparatus for an air flowmeter of Example 1 or 2, the upward displacement anomaly determining process is a process of determining that there is the anomaly based on the estimated air amount, which is calculated through the air amount estimating process, when an adding process of the fuel by the addition valve is not being executed.
   In the above-described configuration, it is determined that an anomaly has occurred based on the estimated air amount calculated through the air amount estimating process when the adding process is not being executed. It is thus unnecessary to consider the fuel added through the adding process in the air amount estimating process. This decreases the number of parameters that should be considered in the setting of the specified amount. The lowering of the setting accuracy of the specified amount is thus easily restrained.
Example 4: In the anomaly diagnosing apparatus for an air flowmeter of Example 1 or 2, the air amount estimating process is a process of calculating the estimated air amount based on a fuel amount added to the exhaust gas by the addition valve in addition to the air-fuel ratio detected by the air-fuel ratio sensor and the fuel amount injected by the fuel injection valve. The upward displacement anomaly determining process includes a process of determining that there is the anomaly based on the estimated air amount calculated through the air amount estimating process when the adding process of the fuel is being executed by the addition valve.
   In the above-described configuration, the estimated air amount is calculated based on the fuel amount added to exhaust gas by the addition valve. Therefore, even when the adding process is being executed, whether there is an anomaly is determined with high accuracy.
Example 5: In the anomaly diagnosing apparatus for an air flowmeter of any one of Examples 1 to 4, the anomaly diagnosing apparatus is configured to execute an exhaust temperature estimating process of calculating an estimated exhaust temperature, which is an estimated value of an exhaust temperature downstream of the catalyst, based on an operating point of the engine. The reference value is the estimated exhaust temperature.
   If the addition valve has a stuck-open anomaly, the addition valve leaks fuel and the fuel reacts with oxygen in the catalyst. The exhaust temperature downstream of the catalyst thus tends to rise. A detected value of the exhaust temperature upstream of the catalyst may be used as the "reference value," with which a detected value of the exhaust temperature detected by the exhaust temperature sensor is compared. However, when, for example, the engine is in a transient operating state, there may be a temperature difference between the upstream side and the downstream side of the catalyst even without a stuck-open anomaly. Therefore, when the temperature upstream of the catalyst is the "reference value," the temperature difference between the reference value and the downstream exhaust temperature may hamper highly accurate determination that there is no stuck-open anomaly. To solve this problem, the above-described configuration employs the estimated exhaust temperature as the "reference value."
Example 6: The anomaly diagnosing apparatus according to any one of Examples 1 to 5 is configured to execute the upward displacement anomaly determining process if a condition is met that the change amount of the air-fuel ratio is smaller than or equal to a predetermined amount.
   In the above-described configuration, the upward displacement anomaly determining process is executed when the condition is met that the change amount of the air-fuel ratio is smaller than or equal to a predetermined amount. This maximally restrains the factor of noise involved in the determination regarding anomalies.
Example 7: An anomaly diagnosing method for an air flowmeter is provided that executes the processes according to Examples 1 to 6.
Example 8: A non-transitory computer readable memory medium is provided that stores a program that causes a processing device to execute the processes described in Examples 1 to 6.

Other aspects and advantages of the present disclosure will become apparent from the following description, taken in conjunction with the accompanying drawings, illustrating exemplary embodiments.

### BRIEF DESCRIPTION OF THE DRAWINGS

The disclosure may be understood by reference to the following description together with the accompanying drawings:
Fig. 1 is a diagram showing an anomaly diagnosing apparatus and an internal combustion engine according to a first embodiment;
Fig. 2 is a block diagram showing part of processes executed by the controller in the internal combustion engine of Fig. 1;
Fig. 3 is a flowchart representing the procedure of a diagnosing process in the engine of Fig. 1;
Fig. 4 is a timing diagram showing advantages in the engine of Fig. 1; and
Fig. 5 is a flowchart representing the procedure of a diagnosing process according to a second embodiment.

### DETAILED DESCRIPTION

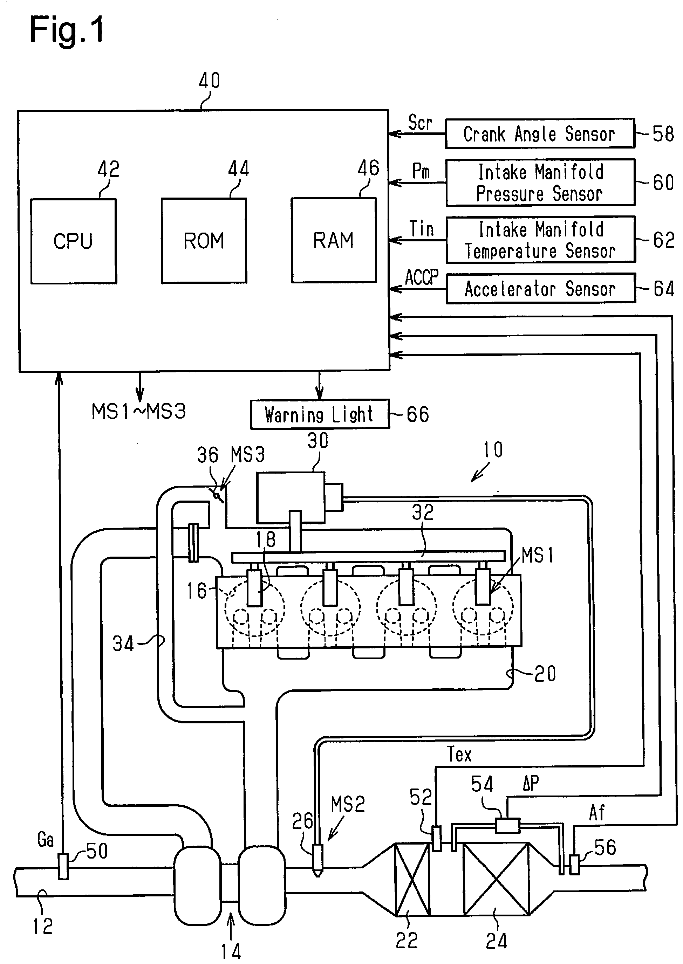

A first embodiment of an anomaly diagnosing apparatus for an air flowmeter will now be described with reference to Figs. 1 to 4.

As shown in Fig. 1, an internal combustion engine 10 is a vehicle-mounted prime mover. The engine 10 draws air through an intake passage 12, supplying the air into combustion chambers 16 of respective cylinders through a forced induction device 14. Fuel injection valves 18 inject fuel, such as diesel oil. In each of the combustion chambers 16, the air-fuel mixture of the air drawn through the intake passage 12 and the fuel is compressed and ignited to be burned. The burned air-fuel mixture is discharged into an exhaust passage 20 as exhaust gas. In the exhaust passage 20, an oxidation catalyst 22 and a diesel particulate filter (DPF 24) are arranged downstream of a forced induction device 14 in this order sequentially from the upstream side. An addition valve 26 is arranged between the forced induction device 14 and the oxidation catalyst 22 to add fuel to the exhaust gas.

A fuel pump 30 supplies fuel to the addition valve 26 and a pressure accumulating pipe 32. The fuel injection valves 18 inject the fuel stored in the pressure accumulating pipe 32 into the combustion chambers 16. The intake passage 12 and the exhaust passage 20 are connected to each other through an EGR passage 34. An EGR valve 36 is arranged in the EGR passage 34 to regulate the communication area of the EGR passage 34.

A controller 40 controls the engine 10 and operates operated portions of the engine 10, including the fuel injection valves 18, the addition valve 26, and the EGR valve 36, to control torque and exhaust gas components, which are controlled amounts of the engine 10. To control the controlled amounts, the controller 40 refers to an intake air amount Ga, an exhaust temperature Tex between the oxidation catalyst 22 and the DPF 24, and a differential pressure ΔP between the upstream side and the downstream side of the DPF 24. The intake air amount Ga is detected by an air flowmeter 50. The exhaust temperature Tex is detected by an exhaust temperature sensor 52. The differential pressure ΔP is detected by a differential pressure sensor 54. The controller 40 also refers to an air-fuel ratio Af detected by an air-fuel ratio sensor 56, an output signal Scr from a crank angle sensor 58, and an intake manifold pressure Pm detected by an intake manifold pressure sensor 60. The air-fuel ratio sensor 56 is arranged downstream of the DPF 24. The intake manifold pressure Pm is the pressure in a section of the intake passage 12 downstream of the forced induction device 14. The controller 40 further refers to an intake manifold temperature Tin detected by an intake manifold temperature sensor 62 and an accelerator operation amount ACCP. The intake manifold temperature Tin is the temperature in a section of the intake passage 12 downstream of the forced induction device 14. The accelerator operation amount ACCP is the depression amount of the accelerator pedal and detected by an accelerator sensor 64.

The controller 40 includes a CPU 42, a ROM 44, and a RAM 46 and controls the aforementioned controlled amounts by executing programs memorized in the ROM 44 by means of the CPU 42.

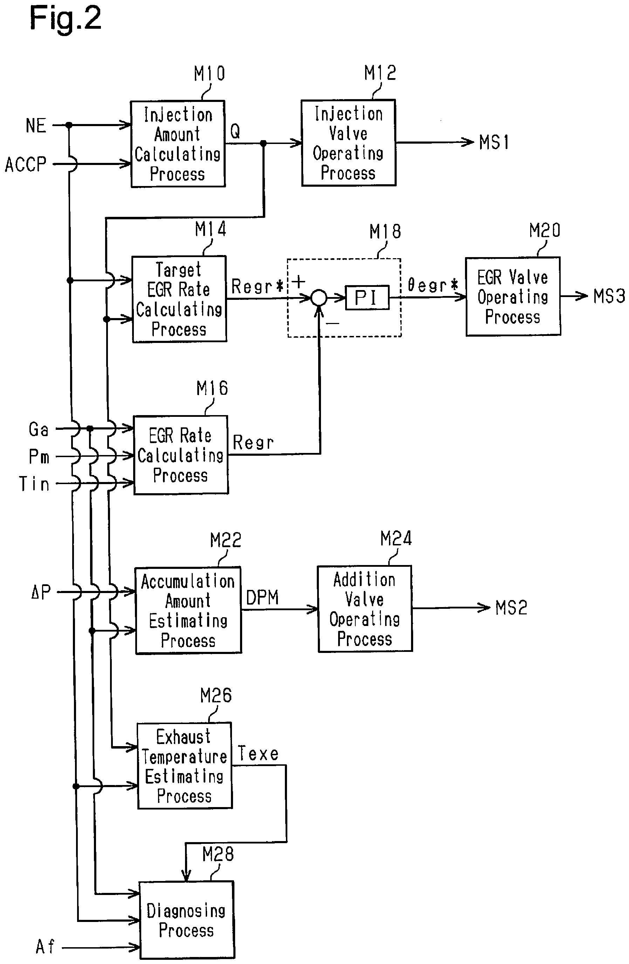

Fig. 2 shows part of processes executed by the controller 40. The processes illustrated in Fig. 2 are implemented by executing programs memorized in the ROM 44 by means of the CPU 42.

An injection amount calculating process M10 is a process of calculating an injection amount Q injected by each fuel injection valve 18 based on the rotation speed NE and the accelerator operation amount ACCP. An injection valve operating process M12 is a process of outputting an operating signal MS1 to each fuel injection valve 18 to operate the fuel injection valve 18 such that the injection amount injected by the fuel injection valve 18 becomes equal to the injection amount Q.

A target EGR rate calculating process M14 is a process of calculating a target EGR rate Regr* as the target of an EGR rate Regr based on the rotation speed NE and the injection amount Q. The EGR rate Regr is a value obtained by dividing the amount of the exhaust gas flowing from the exhaust passage 20 into the intake passage 12 through the EGR passage 34 by the intake air amount Ga. An EGR rate calculating process M16 is a process of calculating the EGR rate Regr based on the intake air amount Ga, the intake manifold pressure Pm, and the intake manifold temperature Tin. A feedback process M18 is a process of calculating a command value θegr* for the opening degree of the EGR valve 36 as an operation amount for feedback-controlling the EGR rate Regr to the target EGR rate Regr*. An EGR valve operating process M20 is a process of outputting an operating signal MS3 to the EGR valve 36 to operate the EGR valve 36 such that the opening degree θegr of the EGR valve 36 becomes equal to the command value θegr*.

An accumulation amount estimating process M22 is a process of calculating an accumulation amount DPM, which is the amount of particulate matter trapped by the DPF 24, based on the differential pressure ΔP and the intake air amount Ga. An addition valve operating process M24 is a process of outputting an operating signal MS2 to the addition valve 26 to operate the addition valve 26 to add fuel to exhaust gas when the accumulation amount DPM becomes greater than or equal to a predetermined amount, as a PM regenerating process for removing the particulate matter that has been trapped by the DPF 24.

An exhaust temperature estimating process M26 is a process of calculating an estimated exhaust temperature Texe, which is an estimated value of the exhaust temperature downstream of the oxidation catalyst 22, based on the rotation speed NE and the injection amount Q, which define the operating point of the engine 10. The estimated exhaust temperature Texe is determined without considering whether the addition valve 26 has added fuel. That is, if the addition valve 26 adds fuel, the temperature of the exhaust gas downstream of the oxidation catalyst 22 may become higher than the temperature of the exhaust gas discharged from the combustion chambers 16. Even in this case, the temperature of the exhaust gas downstream of the oxidation catalyst 22 that has become higher is not included in calculation of the estimated exhaust temperature Texe. Specifically, the exhaust temperature estimating process M26 calculates a greater estimated exhaust temperature Texe when the injection amount Q is great than when the injection amount Q is small.

More specifically, the exhaust temperature estimating process M26 includes a process of setting a base temperature based on the rotation speed NE and the injection amount Q, which define the operating point of the engine 10, and a process of causing the estimated exhaust temperature Texe to converge to the base temperature. Specifically, map data having the rotation speed NE and the injection amount Q as input variables and the base temperature as an output variable is stored in the ROM 44, and the CPU 42 performs map calculation to obtain the base temperature. The map data refers to a data set of discrete values of the input variable and values of the output variable each corresponding to a value of the input variable. When the value of an input variable matches any of the values of the input variable on the map data, the map calculation uses the value of the corresponding output variable on the map data as the calculation result. When the value of the input variable does not match any of the values of the input variable on the map data, the map calculation uses a value obtained by interpolation of multiple values of the output variable included in the map data set as the calculation result. The process of causing the base temperature to converge to the estimated exhaust temperature Texe is a process of updating the estimated exhaust temperature Texe using, for example, an exponential moving average of a current estimated exhaust temperature Texe and a corrected base temperature.

A diagnosing process M28 is a process of diagnosing whether there is an anomaly in the air flowmeter 50 based on the rotation speed NE, the intake air amount Ga, the air-fuel ratio Af, and the estimated exhaust temperature Texe.

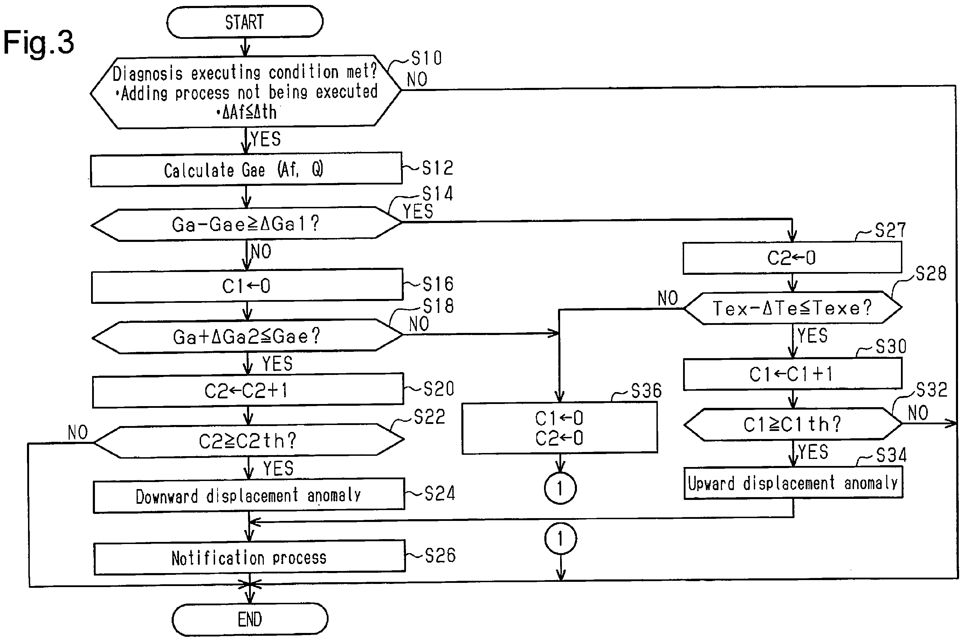

Fig. 3 shows the procedure of the diagnosing process M28. The process of Fig. 3 is implemented by executing a program memorized in the ROM 44 by means of the CPU 42 repeatedly, for example, at predetermined cycles. In the following description, the number of each step is represented by the letter S followed by a numeral.

In the series of processes shown in Fig. 3, the CPU 42 determines whether a condition for executing anomaly diagnosis for the air flowmeter 50 is met (S10). The diagnosis executing condition includes a condition that the logical conjunction of a condition (i) and a condition (ii) is true. The condition (i) is that the adding process of fuel by the addition valve 26 is not being executed. The condition (ii) is that the change amount ΔAf of the air-fuel ratio Af is smaller than or equal to a specified amount Δth. Specifically, the condition (i) is met when the PM regenerating process is not being executed. The change amount ΔAf is an amount calculated by the CPU 42 based on time-series data representing the air-fuel ratio Af and also the change amount of the air-fuel ratio Af per unit time. The change amount may be, for example, the value obtained by subtracting the air-fuel ratio Af that has been obtained in the previous control cycle from the air-fuel ratio Af obtained in the current control cycle. Specifically, the air-fuel ratio Af may change when the EGR rate Regr changes, the intake air amount Ga changes due to the change of the EGR rate Regr, or the injection amount Q changes.

If the CPU 42 determines that the diagnosis executing condition is met (S10: YES), the CPU 42 calculates an estimated air amount Gae based on the air-fuel ratio Af and the injection amount Q (S12). Specifically, the CPU 42 determines a greater estimated air amount Gae when the air-fuel ratio Af is great than when the air-fuel ratio Af is small. The CPU 42 also determines a greater estimated air amount Gae when the injection amount Q is great than when the injection amount Q is small. Such calculation may be implemented by a process of substituting the product of the integrated value of the injection amount Q in a predetermined period and the air-fuel ratio Af for the estimated air amount Gae. Specifically, the intake air amount Ga is determined in correspondence with the aforementioned predetermined period. In other words, the intake air amount Ga is the amount of the air drawn into the intake passage 12 in the predetermined period.

Subsequently, the CPU 42 determines whether the value obtained by subtracting the estimated air amount Gae from the intake air amount Ga is greater than or equal to a specified amount ΔGa1 (S14). This process is a process of determining whether the intake air amount Ga detected by the air flowmeter 50 is excessively greater than the actual air amount. When the CPU 42 determines that the value obtained by subtracting the estimated air amount Gae from the intake air amount Ga is smaller than the specified amount ΔGa1 (S14: NO), the CPU 42 initializes an upward displacement determining counter C1 (S16). The upward displacement determining counter C1 counts the duration in which temporary determination that there is an anomaly in which the intake air amount Ga is excessively greater than the actual air amount is maintained.

Then, the CPU 42 determines whether the value obtained by adding a specified amount ΔGa2 to the intake air amount Ga is smaller than or equal to the estimated air amount Gae (S18). This is a process of determining whether the intake air amount Ga is excessively smaller than the actual air amount. If the CPU 42 determines that the value obtained by adding the specified amount ΔGa2 to the intake air amount Ga is smaller than or equal to the estimated air amount Gae (S18: YES), the CPU 42 increments a downward displacement determining counter C2 (S20). The downward displacement determining counter C2 counts the duration in which temporary determination that there is an anomaly in which the intake air amount Ga is excessively smaller than the actual air amount is maintained. The CPU 42 then determines whether the downward displacement determining counter C2 is greater than or equal to a predetermined value C2th (S22). If the CPU 42 determines that the downward displacement determining counter C2 is greater than or equal to the predetermined value C2th (S22: YES), the CPU 42 determines that there is a downward displacement anomaly (S24). The downward displacement anomaly refers to an anomaly in which the intake air amount Ga is excessively smaller than the actual air amount. Then, the CPU 42 operates a warning light 66, as shown in Fig. 1, to execute a notification process of urging the user of the vehicle to order repair service (S26).

In contrast, if the CPU 42 determines that the value obtained by subtracting the estimated air amount Gae from the intake air amount Ga is greater than or equal to the specified amount ΔGa1 (S14: YES), the CPU 42 initializes the downward displacement determining counter C2 (S27). The CPU 42 then determines whether the value obtained by subtracting a predetermined amount ΔTe from the exhaust temperature Tex is smaller than or equal to the estimated exhaust temperature Texe (S28). This is a process of ascertaining that the cause that has brought about a positive determination in S14 is not a stuck-open anomaly of the addition valve 26. The stuck-open anomaly refers to a state in which, despite the fact that fuel addition by the addition valve 26 is not being executed, fuel flows from the addition valve 26 into the exhaust gas. In other words, when there is a stuck-open anomaly in the addition valve 26, fuel flows into exhaust gas from the addition valve 26. However, such fuel flowing out of the addition valve 26 is not taken into consideration in S12. That is, the estimated air amount Gae is calculated in S12 using the injection amount Q, which is a fuel amount smaller than the total fuel amount (Q + addition amount Ad), which affects the exhaust gas components sensed by the air-fuel ratio sensor 56. The estimated air amount Gae is thus smaller than the actual value. On the other hand, in the case of a stuck-open anomaly, the fuel from the addition valve 26 reacts with oxygen in the oxidation catalyst 22. The exhaust temperature downstream of the oxidation catalyst 22 thus becomes high as compared to a case without a stuck-open anomaly. As a result, the exhaust temperature Tex becomes higher than the estimated exhaust temperature Texe, which is obtained assuming that fuel addition by the addition valve 26 is not being executed. Therefore, the predetermined amount ΔTe is set to an assumed upper limit of the amount by which the exhaust temperature Tex exceeds the estimated exhaust temperature Texe due to a calculation error in the estimated exhaust temperature Texe caused by noise or the like, despite the fact that the addition valve 26 operates normally.

If the CPU 42 determines that the value obtained by subtracting the predetermined amount ΔTe from the exhaust temperature Tex is smaller than or equal to the estimated exhaust temperature Texe (S28: YES), the CPU 42 increments the upward displacement determining counter C1 (S30). The CPU 42 then determines whether the upward displacement determining counter C1 is greater than or equal to a predetermined value C1th (S32). If the CPU 42 determines that the upward displacement determining counter C1 is greater than or equal to the predetermined value C1th (S32: YES), the CPU 42 determines that there is an upward displacement anomaly (S34) and carries out S26.

In contract, if the CPU 42 makes a negative determination in S18 or S28, the CPU 42 initializes the upward displacement determining counter C1 and a downward displacement determining counter C2 (S36). The CPU 42 suspends the series of processes shown in Fig. 3 when S26 or S36 is completed or a negative determination is made in S10, S22, or S32.

The operation and advantages of the present embodiment will now be described.

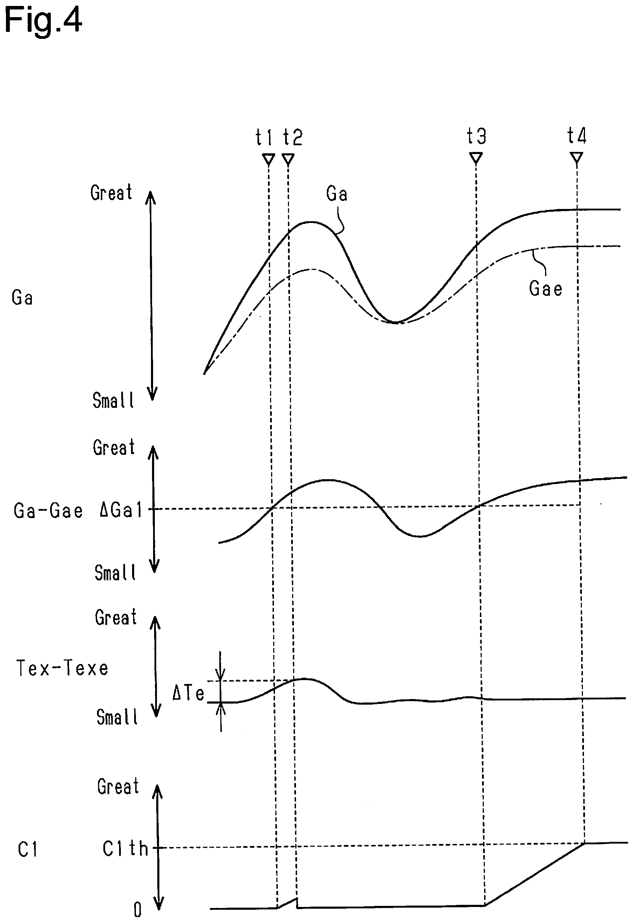

Fig. 4 represents changes of the intake air amount Ga, the value obtained by subtracting the estimated air amount Gae from the intake air amount Ga, the value obtained by subtracting the estimated exhaust temperature Texe from the exhaust temperature Tex, and the upward displacement determining counter C1.

In the period from a point in time t1 to a point in time t2, the intake air amount Ga is greater than the estimated air amount Gae by a margin greater than or equal to the specified amount ΔGa1. Also, in this period, the absolute value of the difference between the exhaust temperature Tex and the estimated exhaust temperature Texe is small. Therefore, the CPU 42 increments the upward displacement determining counter C1. However, at the point in time t2, the exhaust temperature Tex becomes higher than the estimated exhaust temperature Texe by a margin greater than or equal to the predetermined amount ΔTe. This causes the CPU 42 to initialize the upward displacement determining counter C1. Then, continuously following a point in time t3, the intake air amount Ga remains greater than the estimated air amount Gae by a margin greater than or equal to the specified amount ΔGa1. Also, the absolute value of the difference between the exhaust temperature Tex and the estimated exhaust temperature Texe remains small. Therefore, the CPU 42 continuously increments the upward displacement determining counter C1. At a point in time t4, the upward displacement determining counter C1 reaches the predetermined value C1th, thus causing the CPU 42 to determine that an upward displacement anomaly has occurred.

Fig. 4 illustrates a case without a stuck-open anomaly. In a case with a stuck-open anomaly, even when the intake air amount Ga is excessively greater than the estimated air amount Gae, the exhaust temperature Tex is higher than the estimated exhaust temperature Texe by a margin greater than or equal to the predetermined amount ΔTe. The upward displacement determining counter C1 is thus maintained without being incremented.

As has been described, in the present embodiment, not only the difference between the intake air amount Ga and the estimated air amount Gae but also the difference between the exhaust temperature Tex and the estimated exhaust temperature Texe is taken into consideration. This ensures accurate determination regarding the upward displacement anomaly in the air flowmeter 50, while restraining erroneous determination that there is an upward displacement anomaly due to a stuck-open anomaly.

The present embodiment described above further has the following advantages.
(1) The condition that the amount by which the exhaust temperature Tex exceeds the estimated exhaust temperature Texe is smaller than or equal to the predetermined amount ΔTe is set as a condition for determining that there is an upward displacement anomaly. This ensures effective determination regarding the upward displacement anomaly while restraining influence by a temperature difference between the upstream side and the downstream side of the oxidation catalyst 22 due to, for example, transient operation of the engine 10, compared to a case that sets a condition that the difference between the upstream side and the downstream side of the oxidation catalyst 22 is smaller than or equal to a predetermined amount.
(2) The diagnosis executing condition includes the condition that the adding process of fuel by the addition valve 26 is not being executed. This makes it unnecessary to consider errors in the addition amount added by the addition valve 26 as a factor of errors in the estimated air amount Gae. The specified amounts ΔGa1, ΔGa2 are thus minimized. Also, since it is unnecessary to consider errors in the addition amount added by the addition valve 26 as a factor of errors in the estimated exhaust temperature Texe, the predetermined amount ΔTe is minimized.
(3) The diagnosis executing condition includes the condition that the change amount ΔAf of the air-fuel ratio Af is smaller than or equal to the predetermined amount Δth. This maximally restrains a factor of noise involved in anomaly determination.

### <Second Embodiment>

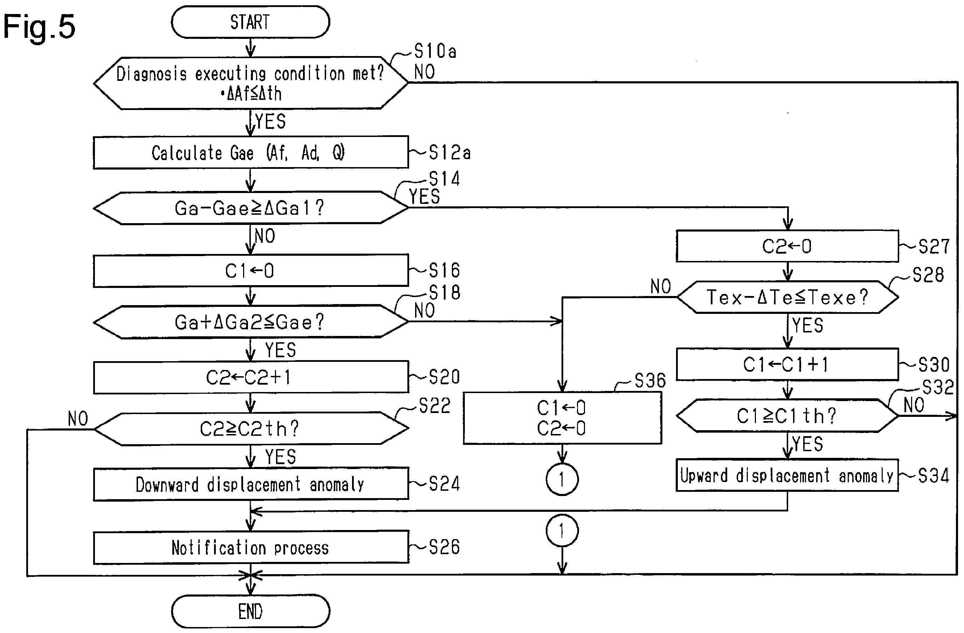

A second embodiment will now be described with reference to Fig. 5. The differences from the first embodiment will mainly be discussed.

In the second embodiment, during the execution of the adding process, the exhaust temperature estimating process M26 takes the increasing amount of the exhaust temperature Tex downstream of the oxidation catalyst 22 caused by the fuel addition by the addition valve 26 into consideration in calculation of the estimated exhaust temperature Texe. Such calculation is implemented by correcting, by means of the CPU 42, the aforementioned base temperature to increase in correspondence with the addition amount Ad added by the addition valve 26. Specifically, the CPU 42 may determine a greater increasing-correction amount when the addition amount Ad is great than when the addition amount Ad is small. Specifically, the increasing-correction amount may be map-calculated by the CPU 42 with reference to map data in which the addition amount Ad is an input variable and the increasing-correction amount is an output variable. The map data is memorized by the ROM 44 in advance.

Fig. 5 represents the procedure of the diagnosing process M28. The process shown in Fig. 3 is implemented by executing a program memorized in the ROM 44 by means of the CPU 42 repeatedly at, for example, predetermined cycles. In Fig. 5, the steps that are identical with the corresponding steps shown in Fig. 3 are given identical step numbers as those given to the corresponding steps of Fig. 3.

In the series of processes shown in Fig. 5, the CPU 42 first determines whether a diagnosis executing condition is met (S10a). The diagnosis executing condition does not include the aforementioned condition (i). If the CPU 42 determines that the diagnosis executing condition is met (S10a: YES), the CPU 42 calculates the estimated air amount Gae based on the intake air amount Ga, the addition amount Ad, and the injection amount Q (S12a). Specifically, the CPU 42 determines a greater estimated air amount Gae when the air-fuel ratio Af is great than when the air-fuel ratio Af is small, when the injection amount Q is great than when the injection amount Q is small, and when the addition amount Ad is great than when the addition amount Ad is small. Such calculation may be implemented by, for example, a process of substituting, for the estimated air amount Gae, the product of the sum of the integrated value of the injection amount Q in a predetermined period and the integrated value of the addition amount Ad in the predetermined period and the air-fuel ratio Af. If the addition amount Ad is zero, the same processing as that of S12 of Fig. 3 is performed.

After completing S12a, the CPU 42 performs S14. If the CPU 42 makes a negative determination in S10a, the CPU 42 suspends the process shown in Fig. 5. Specifically, in the second embodiment, the predetermined amount ΔTe is set to an assumed upper limit of the amount by which the actual exhaust temperature Tex exceeds the estimated exhaust temperature Texe when the adding process is being executed. As a result, a negative determination is made in S28 if there is a stuck-open anomaly in the addition valve 26 and the addition amount in this state is greater than the addition amount at the time of the adding process. This restrains erroneous determination that there is an upward displacement anomaly at the time of a stuck-open anomaly.

### <Correspondence>

The correspondence between the items in the above-described embodiments and the items described in the above SUMMARY is as follows. Below, the correspondence is shown for each of the numbers in the examples described in the above SUMMARY.
[1] The "catalyst" corresponds to the oxidation catalyst 22. The "anomaly diagnosing apparatus" corresponds to the controller 40. The "air amount estimating process" corresponds to S12 and S12a. The "upward displacement anomaly determining process" corresponds to S14 and S28 to S34. The "reference value" corresponds to the estimated exhaust temperature Texe.
[2] The "predetermined period" corresponds to the period that lasts for the time equal to the value obtained by multiplying the control cycle of the processes of Figs. 3 and 5 by the predetermined value C1th.
[3] Example 3 corresponds to the fact that the diagnosis executing condition of S10 includes a condition that "the adding process is in an interrupted state".
[4] The "air amount estimating process" corresponds to S12a.
[5] The "exhaust temperature estimating process" corresponds to M26.
[6] Example 6 corresponds to the fact that the diagnosis executing condition of S10 includes a condition that the change amount ΔAf of the air-fuel ratio Af is smaller than or equal to the predetermined amount Δth.

### <Other Embodiments>

The above-described embodiments may be modified as follows. The above-described embodiments and the following modifications can be combined as long as the combined modifications remain technically consistent with each other.

### Regarding Exhaust Temperature Estimating Process

In the above-described embodiments, the estimated exhaust temperature Texe is calculated based on the rotation speed NE and the injection amount Q, which define the operating point of the internal combustion engine 10. However, the invention is not restricted to this. For example, the accelerator operation amount ACCP may be used instead of the injection amount Q as load. Alternatively, for example, the estimated exhaust temperature Texe may be calculated based on the air-fuel ratio Af in addition to the rotation speed NE and the load. Such calculation is implemented by, for example, a process of correcting the base temperature, which is determined in correspondence with the rotation speed NE and the load, by a correction amount determined in correspondence with the air-fuel ratio and then causing the estimated exhaust temperature Texe to converge to the corrected base temperature. Specifically, the correction amount may be map-calculated by the CPU 42 with reference to map data in which the air-fuel ratio is an input variable and the correction amount is an output variable. The map data is memorized in the ROM 44 in advance.

The process of causing the estimated exhaust temperature Texe to converge to the base temperature, which is determined in correspondence with the operating point, is not restricted to the exponential moving average process. The process may be, for example, a process of setting an output value of a low-pass filter, such as a first-order lag filter or a second-order lag filter, in which the base temperature is an input may be set as the estimated exhaust temperature Texe.

### Regarding Reference Value

For example, as will be described in the section "Regarding Exhaust System," an exhaust temperature sensor may be arranged upstream of the oxidation catalyst 22, and, in S28, a detected value obtained by the upstream exhaust temperature sensor may be used instead of the estimated exhaust temperature Texe. Specifically, in this case, the predetermined amount ΔTe may be set to the upper limit of the amount by which the downstream exhaust temperature exceeds the upstream exhaust temperature in a case without a stuck-open anomaly of the addition valve 26. Alternatively, instead of the detected value of the upstream exhaust temperature sensor, an estimated upstream exhaust temperature based on the operating point of the engine 10 may be used to calculate the "reference value".

### Regarding Upward Displacement Anomaly Determining Process

In the above-described embodiments, it is determined that there is an upward displacement anomaly if the logical conjunction of the condition that the intake air amount Ga is greater than the estimated air amount Gae by a margin greater than or equal to the specified amount ΔGa and the condition that the amount by which the exhaust temperature Tex exceeds the estimated exhaust temperature Texe is smaller than or equal to the predetermined amount ΔTe remains true continuously for a predetermined period. However, the invention is not restricted to this. For example, it may be determined that there is an upward displacement anomaly if the above-described logical conjunction remains true for a predetermined accumulated time or longer in a specified period. Alternatively, for example, it may be determined that there is an upward displacement anomaly immediately after the logical conjunction becomes true.

### Regarding Downward Displacement Anomaly Determining Process

In the above-described embodiments, it is determined that there is a downward displacement anomaly if the intake air amount Ga remains smaller than the estimated air amount Gae by a margin greater than or equal to the specified amount ΔGa2 continuously for a predetermined time. However, the invention is not restricted to this. For example, it may be determined that there is a downward displacement anomaly if the intake air amount Ga remains smaller than the estimated air amount Gae by a margin greater than or equal to the specified amount ΔGa2 continuously for a predetermined accumulated time or longer in a specified period. Alternatively, it may be determined that there is a downward displacement anomaly immediately after the intake air amount Ga becomes smaller than the estimated air amount Gae by a margin greater than or equal to the specified amount 1Ga2.

### Regarding Diagnosis Executing Condition

Although the diagnosis executing condition of the first embodiment includes the condition that the adding process is in an interrupted state, the invention is not restricted to this. For example, exclusively for the downward displacement anomaly determining process, the diagnosis executing condition may include a condition that the adding process is in an interrupted state. Also, in the above-described embodiments, it is not essential to use, as a condition, the condition that the change amount ΔAf of the air-fuel ratio Af is smaller than or equal to the predetermined amount Δth.

### Regarding Notification Process

In the above-described embodiments, the process of operating a device that outputs visual information (the warning light 66) is used, by way of example, as the notification process of issuing a notification about the existence of an anomaly. However, the invention is not restricted to this. For example, the notification process may be a process of operating a device that outputs auditory information, such as warning sound. In other words, any suitable notifying device may be employed as long as the notifying device outputs at least either auditory or visual information.

### Regarding Exhaust System

In the above-described embodiments, the addition valve 26 is provided upstream of the oxidation catalyst 22, while the exhaust temperature sensor 52 and the air-fuel ratio sensor 56 are provided downstream of the oxidation catalyst 22. However, the invention is not restricted to this. For example, the oxidation catalyst 22 may be omitted and replaced by an oxidation catalyst arranged in the DPF 24. In this configuration, the addition valve 26 may be provided upstream of the DPF 24 while the exhaust temperature sensor 52 and the air-fuel ratio sensor 56 may be provided downstream of the DPF 24. Alternatively, the air-fuel ratio sensor 56 may be arranged downstream of the addition valve 26 and upstream of the oxidation catalyst 22.

### Regarding Anomaly Diagnosing Apparatus

The anomaly diagnosing apparatus is not limited to an apparatus that includes the CPU 42 and the ROM 44 and executes software processing. For example, at least part of the processes executed by the software in the above-described embodiment may be executed by hardware circuits dedicated to execution of these processes (such as ASIC). That is, the anomaly diagnosing apparatus may be modified as long as it has any one of the following configurations (a) to (c). (a) A configuration including a processor that executes all of the above-described processes according to programs and a program storage device such as a ROM (including a non-transitory computer readable medium) that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. A plurality of software processing circuits each including a processor and a program storage device and a plurality of dedicated hardware circuits may be provided. That is, the above processes may be executed in any manner as long as the processes are executed by processing circuitry that includes at least one of a set of one or more software processing circuits and a set of one or more dedicated hardware circuits.

### Other Embodiments

The internal combustion engine is not limited to a four-cylinder engine. For example, an in-line six-cylinder engine may be used. The execution of the downward displacement anomaly determining process based on comparison between the estimated air amount Gae and the intake air amount Ga is not always necessary. Also, the adding process is not restricted to the PM regenerating process.

## Claims

1. An anomaly diagnosing apparatus (40) for an air flowmeter (50), wherein
the air flowmeter (50) is arranged in an intake passage (12) of an internal combustion engine (10) and is configured to detect an air amount (Ga),
the engine (10) includes a catalyst (22), which is arranged in an exhaust passage (20) and has an oxidizing function, an addition valve (26), which is arranged upstream of the catalyst (22) in the exhaust passage (20) and is configured to add fuel to exhaust gas, an air-fuel ratio sensor (56), which is arranged downstream of the addition valve (26) in the exhaust passage (20), an exhaust temperature sensor (52), which is arranged downstream of the catalyst (22) in the exhaust passage (20), and a fuel injection valve (18), which is configured to supply fuel into a combustion chamber (16), and
the anomaly diagnosing apparatus (40) is **characterized by** comprising processing means configured to execute:
an air amount estimating process of calculating an estimated air amount (Gae), which is an estimated value of an air amount, based on an air-fuel ratio (Af) detected by the air-fuel ratio sensor (56) and an injection amount (Q) injected by the fuel injection valve (18); and
an upward displacement anomaly determining process of determining that there is an anomaly in which a detected value (Ga) of the air flowmeter (50) is greater than an actual value if a logical conjunction is true of the condition that the detected value (Ga) of the air flowmeter (50) is greater than the estimated air amount (Gae) by a margin greater than or equal to a specified amount (ΔGa1) and the condition that an amount by which a detected value (Tex) of the exhaust temperature sensor (52) exceeds a reference value (Texe) is smaller than or equal to a predetermined amount (ΔTe).

2. The anomaly diagnosing apparatus (40) for an air flowmeter (50) according to claim 1, **characterized in that** the upward displacement anomaly determining process is a process of determining that there is an anomaly in which the detected value (Ga) of the air flowmeter (50) is greater than an actual value if the logical conjunction remains true for a predetermined period (C1th).

3. The anomaly diagnosing apparatus (40) for an air flowmeter (50) according to claim 1 or 2, **characterized in that** the upward displacement anomaly determining process is a process of determining that there is the anomaly based on the estimated air amount (Gae), which is calculated through the air amount estimating process, when an adding process of the fuel by the addition valve (26) is not being executed.

4. The anomaly diagnosing apparatus (40) for an air flowmeter (50) according to claim 1 or 2, **characterized in that**
the air amount estimating process is a process of calculating the estimated air amount (Gae) based on a fuel amount (Ad) added to the exhaust gas by the addition valve (26) in addition to the air-fuel ratio (Af) detected by the air-fuel ratio sensor (56) and the fuel amount (Q) injected by the fuel injection valve (18), and
the upward displacement anomaly determining process includes a process of determining that there is the anomaly based on the estimated air amount (Gae) calculated through the air amount estimating process when the adding process of the fuel is being executed by the addition valve (26).

5. The anomaly diagnosing apparatus (40) for an air flowmeter (50) according to any one of claims 1 to 4, **characterized in that**
the processing means is configured to execute an exhaust temperature estimating process of calculating an estimated exhaust temperature (Texe), which is an estimated value of an exhaust temperature downstream of the catalyst (22), based on an operating point of the engine (10), and
the reference value (Texe) is the estimated exhaust temperature (Texe).

6. The anomaly diagnosing apparatus (40) for an air flowmeter (50) according to any one of claims 1 to 5, **characterized in that** the processing means is configured to execute the upward displacement anomaly determining process when a change amount (ΔAf) of the air-fuel ratio (Af) is smaller than or equal to a predetermined amount (Δth).

7. An anomaly diagnosing method for an air flowmeter (50), wherein
the air flowmeter (50) is arranged in an intake passage (12) of an internal combustion engine (10) and detects an air amount (Ga),
the engine (10) includes a catalyst (22), which is arranged in an exhaust passage (20) and has an oxidizing function, an addition valve (26), which is arranged upstream of the catalyst (22) in the exhaust passage (20) and adds fuel to exhaust gas, an air-fuel ratio sensor (56), which is arranged downstream of the addition valve (26) in the exhaust passage (20), an exhaust temperature sensor (52), which is arranged downstream of the catalyst (22) in the exhaust passage (20), and a fuel injection valve (18), which supplies fuel into a combustion chamber (16),
the anomaly diagnosing method being **characterized by** comprising:
calculating an estimated air amount (Gae), which is an estimated value of an air amount, based on an air-fuel ratio (Af) detected by the air-fuel ratio sensor (56) and an injection amount (Q) injected by the fuel injection valve (18); and
determining that there is an anomaly in which a detected value (Ga) of the air flowmeter (50) is greater than an actual value if a logical conjunction is true of the condition that the detected value (Ga) of the air flowmeter (50) is greater than the estimated air amount (Gae) by a margin greater than or equal to a specified amount (ΔGa1) and the condition that an amount by which a detected value (Tex) of the exhaust temperature sensor (52) exceeds a reference value (Texe) is smaller than or equal to a predetermined amount (ΔTe).

8. A non-transitory computer readable medium that stores a program for causing a processor (42) to execute an anomaly diagnosing process for an air flowmeter (50), wherein
the air flowmeter (50) is arranged in an intake passage (12) of an internal combustion engine (10) and detects an air amount (Ga),
the engine (10) includes a catalyst (22), which is arranged in an exhaust passage (20) and has an oxidizing function, an addition valve (26), which is arranged upstream of the catalyst (22) in the exhaust passage (20) and adds fuel to exhaust gas, an air-fuel ratio sensor (56), which is arranged downstream of the addition valve (26) in the exhaust passage (20), an exhaust temperature sensor (52), which is arranged downstream of the catalyst (22) in the exhaust passage (20), and a fuel injection valve (18), which supplies fuel into a combustion chamber (16),
the non-transitory computer readable medium being **characterized in that** the anomaly diagnosing process includes
calculating an estimated air amount (Gae), which is an estimated value of an air amount, based on an air-fuel ratio (Af) detected by the air-fuel ratio sensor (56) and an injection amount (Q) injected by the fuel injection valve (18), and
determining that there is an anomaly in which a detected value (Ga) of the air flowmeter (50) is greater than an actual value if a logical conjunction is true of the condition that the detected value (Ga) of the air flowmeter (50) is greater than the estimated air amount (Gae) by a margin greater than or equal to a specified amount (ΔGa1) and the condition that an amount by which a detected value (Tex) of the exhaust temperature sensor (52) exceeds a reference value (Texe) is smaller than or equal to a predetermined amount (ΔTe).

## Patentansprüche

1. Vorrichtung (40) zur Diagnose von Anomalien für einen Luftströmungsmesser (50), wobei
der Luftströmungsmesser (50) in einem Einlasskanal (12) eines Verbrennungsmotors (10) angeordnet und dazu ausgestaltet ist, eine Luftmenge (Ga) zu erfassen,
der Motor (10) einen Katalysator (22), der in einem Abgaskanal (20) angeordnet ist und eine Oxidationsfunktion aufweist, ein Zugabeventil (26), das stromaufwärts des Katalysators (22) in dem Abgaskanal (20) angeordnet ist und dazu ausgestaltet ist, Kraftstoff zu Abgas zuzugeben, einen Luft-Kraftstoff-Verhältnis-Sensor (56), der stromabwärts des Zugabeventils (26) in dem Abgaskanal (20) angeordnet ist, einen Abgastemperatursensor (52), der stromabwärts des Katalysators (22) in dem Abgaskanal (20) angeordnet ist, und ein Kraftstoffeinspritzventil (18) beinhaltet, das dazu ausgestaltet ist, Kraftstoff in eine Brennkammer (16) zuzuführen, und
die Vorrichtung (40) zur Diagnose von Anomalien **dadurch gekennzeichnet ist, dass** sie Verarbeitungsmittel umfasst, die ausgestaltet sind zum Ausführen:
eines Luftmengen-Schätzprozesses zum Berechnen einer geschätzten Luftmenge (Gae), die ein geschätzter Wert einer Luftmenge ist, basierend auf einem Luft-Kraftstoff-Verhältnis (Af), das von dem Luft-Kraftstoff-Verhältnis-Sensor (56) erfasst wird, und einer Einspritzmenge (Q), die von dem Kraftstoffeinspritzventil (18) eingespritzt wird, und
eines Hochverschiebungsanomalie-Bestimmungsprozesses zum Bestimmen, dass es eine Anomalie gibt, bei der ein erfasster Wert (Ga) des Luftströmungsmessers (50) größer als ein tatsächlicher Wert ist, wenn eine logische Verknüpfung für die Bedingung, dass der erfasste Wert (Ga) des Luftströmungsmessers (50) um eine Differenz größer oder gleich einer bestimmten Menge (ΔGa1) größer als die geschätzte Luftmenge (Gae) ist, und die Bedingung, dass ein Betrag, um den ein erfasster Wert (Tex) des Abgastemperatursensors (52) einen Referenzwert (Texe) überschreitet, kleiner oder gleich einem vorbestimmten Betrag (ΔTe) ist, wahr ist.

2. Vorrichtung (40) zur Diagnose von Anomalien für einen Luftströmungsmesser (50) nach Anspruch 1, **dadurch gekennzeichnet, dass** der Hochverschiebungsanomalie-Bestimmungsprozess ein Prozess zum Bestimmen ist, dass es eine Anomalie gibt, bei welcher der erfasste Wert (Ga) des Luftströmungsmessers (50) größer als ein tatsächlicher Wert ist, wenn die logische Verknüpfung für einen vorbestimmten Zeitraum (C1 th) wahr bleibt.

3. Vorrichtung (40) zur Diagnose von Anomalien für einen Luftströmungsmesser (50) nach Anspruch 1 oder 2, **dadurch gekennzeichnet, dass** der Hochverschiebungsanomalie-Bestimmungsprozess ein Prozess zum Bestimmen ist, dass es die Anomalie basierend auf der geschätzten Luftmenge (Gae) gibt, die durch den Luftmengen-Schätzprozess berechnet wird, wenn ein Zugabeprozess des Kraftstoffes von dem Zugabeventil (26) nicht ausgeführt wird.

4. Vorrichtung (40) zur Diagnose von Anomalien für einen Luftströmungsmesser (50) nach Anspruch 1 oder 2, **dadurch gekennzeichnet, dass**
der Luftmengen-Schätzprozess ein Prozess zum Berechnen der geschätzten Luftmenge (Gae) basierend auf einer Kraftstoffmenge (Ad), die zu dem Abgas von dem Zugabeventil (26) gegeben wird, zusätzlich zu dem Luft-Kraftstoff-Verhältnis (Af), das von dem Luft-Kraftstoff-Verhältnis-Sensor (56) erfasst wird, und der Kraftstoffmenge (Q), die von dem Kraftstoffeinspritzventil (18) eingespritzt wird, ist, und
der Hochverschiebungsanomalie-Bestimmungsprozess einen Prozess zum Bestimmen beinhaltet, dass es die Anomalie basierend auf der geschätzten Luftmenge (Gae), die durch den Luftmengen-Schätzprozess berechnet wird, gibt, wenn der Zugabeprozess des Kraftstoffes von dem Zugabeventil (26) ausgeführt wird.

5. Vorrichtung (40) zur Diagnose von Anomalien für einen Luftströmungsmesser (50) nach einem der Ansprüche 1 bis 4, **dadurch gekennzeichnet, dass**
das Verarbeitungsmittel dazu ausgestaltet ist, einen Abgastemperatur-Schätzprozess zum Berechnen einer geschätzten Abgastemperatur (Texe), die ein geschätzter Wert einer Abgastemperatur stromabwärts des Katalysators (22) ist, basierend auf einem Betriebspunkt des Motors (10) auszuführen, und
der Referenzwert (Texe) die geschätzte Abgastemperatur (Texe) ist.

6. Vorrichtung (40) zur Diagnose von Anomalien für einen Luftströmungsmesser (50) nach einem der Ansprüche 1 bis 5, **dadurch gekennzeichnet, dass** das Verarbeitungsmittel dazu ausgestaltet ist, den Hochverschiebungsanomalie-Bestimmungsprozess auszuführen, wenn ein Änderungsbetrag (ΔAf) des Luft-Kraftstoff-Verhältnisses (Af) kleiner oder gleich einem vorbestimmten Betrag (Δth) ist.

7. Verfahren zur Diagnose von Anomalien für einen Luftströmungsmesser (50), wobei
der Luftströmungsmesser (50) in einem Einlasskanal (12) eines Verbrennungsmotors (10) angeordnet ist und eine Luftmenge (Ga) erfasst,
der Motor (10) einen Katalysator (22), der in einem Abgaskanal (20) angeordnet ist und eine Oxidationsfunktion aufweist, ein Zugabeventil (26), das stromaufwärts des Katalysators (22) in dem Abgaskanal (20) angeordnet ist und Kraftstoff zu Abgas zugibt, einen Luft-Kraftstoff-Verhältnis-Sensor (56), der stromabwärts des Zugabeventils (26) in dem Abgaskanal (20) angeordnet ist, einen Abgastemperatursensor (52), der stromabwärts des Katalysators (22) in dem Abgaskanal (20) angeordnet ist, und ein Kraftstoffeinspritzventil (18) beinhaltet, das Kraftstoff in eine Brennkammer (16) zuführt,
das Verfahren zur Diagnose von Anomalien **dadurch gekennzeichnet ist, dass** es umfasst:
Berechnen einer geschätzten Luftmenge (Gae), die ein geschätzter Wert einer Luftmenge ist, basierend auf einem Luft-Kraftstoff-Verhältnis (Af), das von dem Luft-Kraftstoff-Verhältnis-Sensor (56) erfasst wird, und einer Einspritzmenge (Q), die von dem Kraftstoffeinspritzventil (18) eingespritzt wird, und
Bestimmen, dass es eine Anomalie gibt, bei der ein erfasster Wert (Ga) des Luftströmungsmessers (50) größer als ein tatsächlicher Wert ist, wenn eine logische Verknüpfung für die Bedingung, dass der erfasste Wert (Ga) des Luftströmungsmessers (50) um eine Differenz größer oder gleich einer bestimmten Menge (ΔGa1) größer als die geschätzte Luftmenge (Gae) ist, und die Bedingung, dass ein Betrag, um den ein erfasster Wert (Tex) des Abgastemperatursensors (52) einen Referenzwert (Texe) überschreitet, kleiner oder gleich einem vorbestimmten Betrag (ΔTe) ist, wahr ist.

8. Nicht-transitorisches computerlesbares Medium, das ein Programm speichert, um einen Prozessor (42) zu veranlassen, einen Prozess zur Diagnose von Anomalien für einen Luftströmungsmesser (50) auszuführen, wobei
der Luftströmungsmesser (50) in einem Einlasskanal (12) eines Verbrennungsmotors (10) angeordnet ist und eine Luftmenge (Ga) erfasst,
der Motor (10) einen Katalysator (22), der in einem Abgaskanal (20) angeordnet ist und eine Oxidationsfunktion aufweist, ein Zugabeventil (26), das stromaufwärts des Katalysators (22) in dem Abgaskanal (20) angeordnet ist und Kraftstoff zu Abgas zugibt, einen Luft-Kraftstoff-Verhältnis-Sensor (56), der stromabwärts des Zugabeventils (26) in dem Abgaskanal (20) angeordnet ist, einen Abgastemperatursensor (52), der stromabwärts des Katalysators (22) in dem Abgaskanal (20) angeordnet ist, und ein Kraftstoffeinspritzventil (18) beinhaltet, das Kraftstoff in eine Brennkammer (16) zuführt,
das nicht-transitorische computerlesbare Medium **dadurch gekennzeichnet ist, dass** der Prozess zur Diagnose von Anomalien beinhaltet
Berechnen einer geschätzten Luftmenge (Gae), die ein geschätzter Wert einer Luftmenge ist, basierend auf einem Luft-Kraftstoff-Verhältnis (Af), das von dem Luft-Kraftstoff-Verhältnis-Sensor (56) erfasst wird, und einer Einspritzmenge (Q), die von dem Kraftstoffeinspritzventil (18) eingespritzt wird, und
Bestimmen, dass es eine Anomalie gibt, bei der ein erfasster Wert (Ga) des Luftströmungsmessers (50) größer als ein tatsächlicher Wert ist, wenn eine logische Verknüpfung für die Bedingung, dass der erfasste Wert (Ga) des Luftströmungsmessers (50) um eine Differenz größer oder gleich einer bestimmten Menge (ΔGa1) größer als die geschätzte Luftmenge (Gae) ist, und die Bedingung, dass ein Betrag, um den ein erfasster Wert (Tex) des Abgastemperatursensors (52) einen Referenzwert (Texe) überschreitet, kleiner oder gleich einem vorbestimmten Betrag (ΔTe) ist, wahr ist.

## Revendications

1. Appareil de diagnostic d'anomalie (40) pour un débitmètre d'air (50), dans lequel
le débitmètre d'air (50) est disposé dans un passage d'admission (12) d'un moteur à combustion interne (10) et est configuré pour détecter une quantité d'air (Ga),
le moteur (10) comprend un catalyseur (22), qui est disposé dans un passage d'échappement (20) et a une fonction d'oxydation, une soupape d'addition (26), qui est disposée en amont du catalyseur (22) dans le passage d'échappement (20) et est configurée pour ajouter du carburant au gaz d'échappement, un capteur de rapport air-carburant (56), qui est disposé en aval de la soupape d'addition (26) dans le passage d'échappement (20), un capteur de température d'échappement (52), qui est disposé en aval du catalyseur (22) dans le passage d'échappement (20), et une soupape d'injection de carburant (18), qui est configurée pour délivrer du carburant dans une chambre de combustion (16), et
l'appareil de diagnostic d'anomalie (40) est **caractérisé en ce qu'**il comprend des moyens de traitement configurés pour exécuter :
un processus d'estimation de quantité d'air calculant une quantité d'air estimée (Gae), qui est une valeur estimée d'une quantité d'air, sur la base d'un rapport air-carburant (Af) détecté par le capteur de rapport air-carburant (56) et d'une quantité d'injection (Q) injectée par la soupape d'injection de carburant (18) ; et
un processus de détermination d'anomalie de déplacement vers le haut déterminant qu'il y a une anomalie **en ce qu'**une valeur détectée (Ga) du débitmètre d'air (50) est plus grande qu'une valeur réelle si une conjonction logique est vraie de la condition que la valeur détectée (Ga) du débitmètre d'air (50) est plus grande que la quantité d'air estimée (Gae) d'une marge supérieure ou égale à une quantité spécifiée (ΔGa1) et de la condition qu'une quantité de laquelle une valeur détectée (Tex) du capteur de température d'échappement (52) dépasse une valeur de référence (Texe) est inférieure ou égale à une quantité prédéterminé (ΔTe).

2. Appareil de diagnostic d'anomalie (40) pour un débitmètre d'air (50) selon la revendication 1, **caractérisé en ce que** le processus de détermination d'anomalie de déplacement vers le haut est un processus déterminant qu'il y a une anomalie **en ce que** la valeur détectée (Ga) du débitmètre d'air (50) est plus grande qu'une valeur réelle si la conjonction logique reste vraie pendant une période prédéterminée (C1th).

3. Appareil de diagnostic d'anomalie (40) pour un débitmètre d'air (50) selon la revendication 1 ou 2, **caractérisé en ce que** le processus de détermination d'anomalie de déplacement vers le haut est un processus déterminant qu'il y a l'anomalie sur la base de la quantité d'air estimée (Gae), qui est calculée par l'intermédiaire du processus d'estimation de quantité d'air, quand un processus d'addition du carburant par la soupape d'addition (26) n'est pas exécuté.

4. Appareil de diagnostic d'anomalie (40) pour un débitmètre d'air (50) selon la revendication 1 ou 2, **caractérisé en ce que**
le processus d'estimation de quantité d'air est un processus calculant la quantité d'air estimée (Gae) sur la base d'une quantité de carburant (Ad) ajoutée au gaz d'échappement par la soupape d'addition (26) en plus du rapport air-carburant (Af) détecté par le capteur de rapport air-carburant (56) et de la quantité de carburant (Q) injectée par la soupape d'injection de carburant (18), et
le processus de détermination d'anomalie de déplacement vers le haut comprend un processus déterminant qu'il y a l'anomalie sur la base de la quantité d'air estimée (Gae) calculée par l'intermédiaire du processus d'estimation de quantité d'air quand le processus d'addition du carburant est exécuté par la soupape d'addition (26) .

5. Appareil de diagnostic d'anomalie (40) pour un débitmètre d'air (50) selon l'une quelconque des revendications 1 à 4, **caractérisé en ce que**
les moyens de traitement sont configurés pour exécuter un processus d'estimation de température d'échappement calculant une température d'échappement estimée (Texe), qui est une valeur estimée d'une température d'échappement en aval du catalyseur (22), sur la base d'un point de fonctionnement du moteur (10), et
la valeur de référence (Texe) est la température d'échappement estimée (Texe).

6. Appareil de diagnostic d'anomalie (40) pour un débitmètre d'air (50) selon l'une quelconque des revendications 1 à 5, **caractérisé en ce que** les moyens de traitement sont configurés pour exécuter le processus de détermination d'anomalie de déplacement vers le haut quand une quantité de changement (ΔAf) du rapport air-carburant (Af) est inférieure ou égale à une quantité prédéterminée (Δth).

7. Procédé de diagnostic d'anomalie pour un débitmètre d'air (50), dans lequel
le débitmètre d'air (50) est disposé dans un passage d'admission (12) d'un moteur à combustion interne (10) et détecte une quantité d'air (Ga),
le moteur (10) comprend un catalyseur (22), qui est disposé dans un passage d'échappement (20) et a une fonction d'oxydation, une soupape d'addition (26), qui est disposée en amont du catalyseur (22) dans le passage d'échappement (20) et ajoute du carburant au gaz d'échappement, un capteur de rapport air-carburant (56), qui est disposé en aval de la soupape d'addition (26) dans le passage d'échappement (20), un capteur de température d'échappement (52), qui est disposé en aval du catalyseur (22) dans le passage d'échappement (20), et une soupape d'injection de carburant (18), qui délivre du carburant dans une chambre de combustion (16),
le procédé de diagnostic d'anomalie étant **caractérisé en ce qu'**il comprend le fait de :
calculer une quantité d'air estimée (Gae), qui est une valeur estimée d'une quantité d'air, sur la base d'un rapport air-carburant (Af) détecté par le capteur de rapport air-carburant (56) et d'une quantité d'injection (Q) injectée par la soupape d'injection de carburant (18) ; et
déterminer qu'il y a une anomalie **en ce qu'**une valeur détectée (Ga) du débitmètre d'air (50) est plus grande qu'une valeur réelle si une conjonction logique est vraie de la condition que la valeur détectée (Ga) du débitmètre d'air (50) est plus grande que la quantité d'air estimée (Gae) d'une marge supérieure ou égale à une quantité spécifiée (ΔGa1) et de la condition qu'une quantité de laquelle une valeur détectée (Tex) du capteur de température d'échappement (52) dépasse une valeur de référence (Texe) est inférieure ou égale à une quantité prédéterminé (ΔTe).

8. Support lisible par ordinateur non-transitoire qui stocke un programme pour amener un processeur (42) à exécuter un processus de diagnostic d'anomalie pour un débitmètre d'air (50), dans lequel
le débitmètre d'air (50) est disposé dans un passage d'admission (12) d'un moteur à combustion interne (10) et détecte une quantité d'air (Ga),
le moteur (10) comprend un catalyseur (22), qui est disposé dans un passage d'échappement (20) et a une fonction d'oxydation, une soupape d'addition (26), qui est disposée en amont du catalyseur (22) dans le passage d'échappement (20) et ajoute du carburant au gaz d'échappement, un capteur de rapport air-carburant (56), qui est disposé en aval de la soupape d'addition (26) dans le passage d'échappement (20), un capteur de température d'échappement (52), qui est disposé en aval du catalyseur (22) dans le passage d'échappement (20), et une soupape d'injection de carburant (18), qui délivre du carburant dans une chambre de combustion (16),
le support lisible par ordinateur non-transitoire étant **caractérisé en ce que** le processus de diagnostic d'anomalie comprend le fait de :
calculer une quantité d'air estimée (Gae), qui est une valeur estimée d'une quantité d'air, sur la base d'un rapport air-carburant (Af) détecté par le capteur de rapport air-carburant (56) et d'une quantité d'injection (Q) injectée par la soupape d'injection de carburant (18), et
déterminer qu'il y a une anomalie **en ce qu'**une valeur détectée (Ga) du débitmètre d'air (50) est plus grande qu'une valeur réelle si une conjonction logique est vraie de la condition que la valeur détectée (Ga) du débitmètre d'air (50) est plus grande que la quantité d'air estimée (Gae) d'une marge supérieure ou égale à une quantité spécifiée (ΔGa1) et de la condition qu'une quantité de laquelle une valeur détectée (Tex) du capteur de température d'échappement (52) dépasse une valeur de référence (Texe) est inférieure ou égale à une quantité prédéterminé (ΔTe).
